# EUROPÄISCHE PATENTSCHRIFT

(11) **EP 3 310 603 B1**
(45) Veröffentlichungstag und Bekanntmachung des Hinweises auf die Patenterteilung: **11.03.2020**
(21) Anmeldenummer: 16729542.7
(22) Anmeldetag: 10.06.2016
(51) Int. Cl.: B60J 10/30, B60J 10/16, B60J 10/24, B60J 10/00

(54) **DICHTUNGSELEMENT AUS ELASTOMERMATERIAL**
SEALING ELEMENT MADE OF ELASTOMER MATERIAL
ÉLÉMENT D'ÉTANCHÉITÉ EN MATIÈRE ÉLASTOMÈRE

(30) Priorität: 18.06.2015 DE 102015109795
(43) Veröffentlichungstag der Anmeldung: 25.04.2018
(73) Patentinhaber: CQLT SaarGummi Technologies S.à.r.l., 5544 Remich (LU)
(72) Erfinder: THIEL, Daniel, 66701 Beckingen-Oppen (DE); ROUX, Sébastien, 76520 St. Aubin-Celloville (FR)
(74) Vertreter: Patentanwälte Bernhardt / Wolff Partnerschaft mbB
(86) Internationale Anmeldenummer: PCT/EP2016/063343
(87) Internationale Veröffentlichungsnummer: WO 2016/202699

(56) Entgegenhaltungen:
- EP-A1- 2 620 577
- WO-A1-2009/043357
- JP-A- S5 657 513
- JP-A- 2004 284 420
- JP-A- 2011 207 255
- US-A1- 2001 031 351

## Beschreibung

Die Erfindung betrifft ein Dichtungselement aus Elastomermaterial, das zur Befestigung auf einem Dichtungsträger, insbesondere an einer Fahrzeugkarosserie, vorgesehen ist, gemäß Oberbegriff des Anspruchs 1.
Die Erfindung betrifft ferner einen extrudierten Dichtungsstrang, der zur Befestigung auf einem Dichtungsträger, insbesondere an einer Fahrzeugkarosserie, vorgesehen und mit in Stranglängsrichtung zueinander im Abstand angeordneten Elementen zur Verbindung des Dichtungsstrangs mit dem Dichtungsträger vorgefertigt ist, gemäß Oberbegriff des Anspruchs 9.

Es ist bekannt, Dichtungselemente, insbesondere extrudierte Dichtungsstränge, mit Dichtungssitzen an einer Fahrzeugkarosserie zu verkleben oder durch mechanische Mittel zu verbinden. Als mechanische Mittel kommen vor allem in Karosserielöchern einrastende Steckverbindungselemente zum Einsatz. Zur Anbringung der Steckverbindungselemente an dem Dichtungsstrang und insbesondere zur Vorfertigung eines Dichtungsstrangs mit daran angebrachten Steckverbindungselementen werden herkömmlich in den Dichtungsstrang Aufnahmelöcher eingebracht, in die dann die Steckverbindungselemente unter hohem Arbeitsaufwand einzudrücken sind.

Aus der EP 2 620 577 A1 ist bekannt, ein strangförmiges Einklemmschutzprofil mittels eines thermoplastischen Materials an einer bandartigen Kontaktfläche mit einem ebenen Träger zu verschweißen. Wie bei Einklemmschutzprofilen üblich, besteht dieses aus gummielastischem Kunststoffmaterial und umfasst zwei durch einen Hohlraum voneinander getrennte elektrische Leiter, welche bei Verformung in elektrisch leitenden Kontakt kommen. Hierdurch kann beispielsweise ein Schaltsignal ausgelöst werden, um ein Einklemmen zu verhindern. Des Weiteren ist aus WO 2009/043357 A1 bekannt, zwei aus PTFE bestehende Teile mittels eines zuvor an den Stoßstellen aufgebrachten Verbindungsmittels stoffflüssig zu verbinden. Aus US 2001/031351 A1, JP 2011 207255A und JP S56 57513 A sind weitere Möglichkeiten der Verbindung eines Dichtungselements mit einem Dichtungsträger bekannt.

Der Erfindung liegt die Aufgabe zugrunde, den Aufwand für die Befestigung von Dichtungselementen auf Dichtungsträgern, zu verringern.

Diese Aufgabe wird erfindungsgemäß dadurch gelöst, dass die Beschichtung eine laminierte aufgebrachte Folie ist, mehrere Lagen aufweist und, jeweils als Außenlage, eine Lage aus Polyethylen (PE) und eine Lage aus Polyamid (PA) umfasst.

Durch die erfindungsgemäß stoffschlüssige Verbindung eines Dichtungsstrangs mit Elementen zur mechanischen Verbindung des Dichtungsstrangs mit dem Dichtungsträger lässt sich mit geringem Arbeitsaufwand ein mit solchen Elementen versehener Dichtungsstrang vorfertigen.

Erfindungsgemäß ist die Beschichtung eine auf den Dichtungsstrang aufgebrachte Folie, die insbesondere vor Abschluss der Vulkanisation mit dem extrudierten Strang verbunden wird.

Vorzugsweise liegt die Dicke der Beschichtung im Bereich von 30 µm bis 700 µm.

Die Beschichtung besteht vorzugsweise aus einem Thermoplastmaterial, so dass eine Verschweißbarkeit mit Verbindungselementen aus Thermoplastmaterialien möglich ist, wobei insbesondere die Materialien der Beschichtung und der Verbindungselemente übereinstimmen können.

Vorzugsweise sind strangförmige Dichtungselemente mit in Stranglängsrichtung zueinander im Abstand angeordneten Verbindungselementen vorgesehen.

Insbesondere handelt es sich bei den Verbindungselementen um in einem Steckloch des Dichtungsträgers einrastende Steckverbindungselemente.

Die Beschichtung kann z.B. an einer Schlauchwand eines schlauchförmigen Dichtungsabschnitts oder aber an einem Fußteil eines lippenförmigen Dichtungsabschnitts eines extrudierten Dichtungsstrangs gebildet sein.

Vorzugsweise ist das Verbindungselement mit dem Dichtungselement über einen an die Form des beschichteten Dichtungselements angepassten Fußteil verschweißbar, wobei durch Form und Abmessungen des Fußteils der Zugang von Schweißgeräten gesichert ist.

Zur Verschweißung kommt z.B. neben Ultraschallschweißen und Laserschweißen auch Reibschweißen in Betracht.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine Querschnittsansicht eines Dichtungsstrangs mit einem daran gemäß Stand der Technik angebrachten Steckverbindungselement,
- Fig. 2: einen Dichtungsstrang nach der Erfindung, der mit einem Steckverbindungselement verschweißt ist, in einer Querschnittsansicht,
- Fig. 3: eine geschnittene Längsseitenansicht des Dichtungsstrangs von Fig. 2, und
- Fig. 4: einen lippenförmigen Dichtungsstrang nach der Erfindung, der mit einer Trägerleiste aus Kunststoff verschweißt ist.

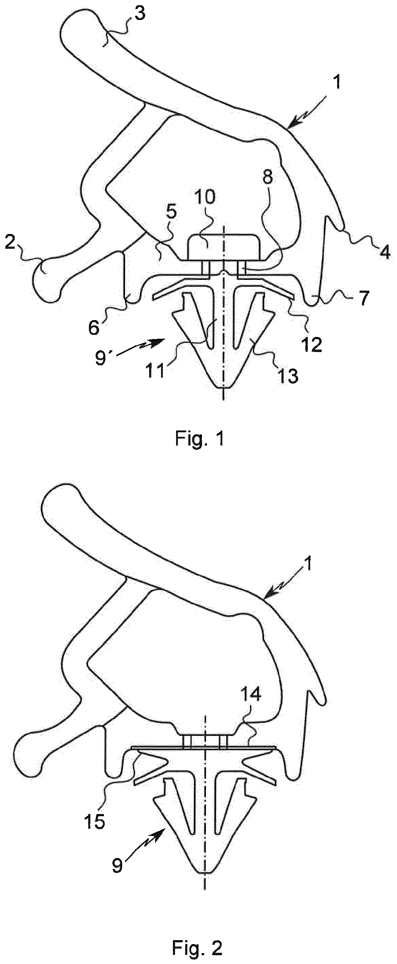

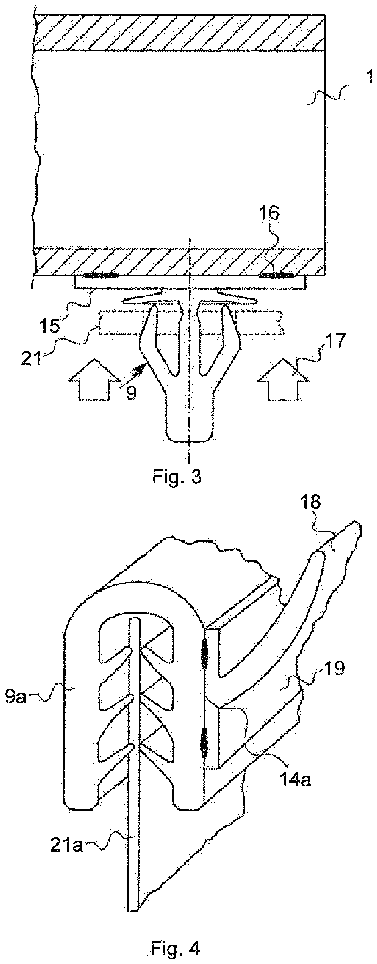

Ein in Fig. 1 gezeigter extrudierter Dichtungsstrang der z.B. aus EPDM besteht, umfasst einen schlauchförmigen Dichtungsabschnitt 1, von dem Dichtungslippen 2 bis 4 abstehen. Ein zur Verbindung mit einem in Fig. 3 gezeigten Dichtungsträger 21 vorgesehener Schlauchwandabschnitt 5 ist durch Stegvorsprünge 6 und 7 seitlich begrenzt. In dem Schlauchwandabschnitt 5 befinden sich zueinander in Stranglängsrichtung beabstandete Bohrungen 8 zur jeweiligen Aufnahme eines Steckverbindungselements 9.

Ein Kopf 10 des Steckverbindungselements 9' hintergreift die Bohrung 8. Von einem Bolzenteil 11 des Steckverbindungselements 9' erstreckt sich radial ein Ringteller 12 zur Anlage gegen den (nicht gezeigten) Dichtungsträger. Vom Bolzenende stehen Widerhakenelemente 13 ab, welche im montierten Zustand des Steckverbindungselements 9' ein Steckloch im Dichtungsträger hintergreifen.

Zur Vorfertigung des in Fig. 1 gezeigten Dichtungsstrangs unter Anbringung der Steckverbindungselemente 9' sind die Köpfe 10 der Steckverbindungselemente jeweils mit hohem Arbeitsaufwand durch die Bohrungen 8 unter Dehnung des Schlauchwandabschnitts 5 einzuführen.

Der in Fig. 2 und 3 gezeigte Dichtungsstrang unterscheidet sich von dem Dichtungsstrang nach Fig. 1 dadurch, dass der Schlauchwandabschnitt 5 keine Bohrungen aufweist, jedoch mit einer Beschichtung 14 versehen ist. In dem gezeigten Ausführungsbeispiel handelt es sich um eine TPEBeschichtung, die mit dem gezeigten Dichtungsstrang mitextrudiert und durch die gemeinsame Extrusion mit dem Elastomermaterial des Dichtungsstrangs, vorzugsweise EPDM, fest verbunden ist.

Ein in Fig. 2 und 3 gezeigtes Steckverbindungselement 9 weist einen, in Draufsicht gesehen, über das übrige Steckverbindungselement 9 radial vorstehenden Fußteil 15 auf, wie insbesondere Fig. 3 erkennen lässt. Indem der Fußteil 15 in Stranglängsrichtung gemäß Pfeilen 17 seitlich vorsteht, besteht die Möglichkeit, ein Ultraschallschweißwerkzeug anzusetzen oder einen Laserstrahl an dem übrigen Steckverbindungselement 9 vorbei auf Schweißstellen 16 zu richten.

Die TPE-Beschichtung 14 kann mit dem Material des Steckverbindungselements 9, das in dem gezeigten Beispiel ebenfalls aus Polyamid besteht, eine Schweißverbindung eingehen. So lässt sich über die TPE-Beschichtung 14 eine feste Verbindung zwischen dem Dichtungsstrang und dem Steckverbindungselement 9 herstellen.

Fig. 4 zeigt einen mit einer Dichtungslippe 18 ausgebildeten Dichtungsstrang, der einen Fußteil 19 aufweist. Auf seiner der Lippe abgewandten Seite ist der Fußteil mit einer Beschichtung 14a versehen, über die der Dichtungsstrang mit einem Verbindungselement 9a aus Kunststoff, in dem gezeigten Beispiel aus Polypropylen, verschweißt ist. Das U-förmige Verbindungselement 9a ist auf einen Dichtungsträger 21a in Form eines Karosserieflansches aufgesteckt.

Es versteht sich, dass die vorangehend beschriebenen Dichtungsträger unter der Voraussetzung, dass der Dichtungsträger, z.B. der Träger 21 oder 21a aus einem verschweißbaren Material, insbesondere Kunststoffmaterial, besteht, direkt mit einem solchen Dichtungsträger verschweißt sein können.

Ferner können die vorangehend beschriebenen Beschichtungen 14,14a mehrere Lagen aufweisen. Insbesondere für aufgebrachte, die Beschichtung bildende Folien kommen mehrere Lagen in Betracht, z.B. eine Lage aus Polyethylen (PE) oder Propylen (PP), die dem Dichtungselement zugewandt ist, und eine Lage aus Polyamid (PA), die dem Verbindungselement oder Dichtungsträger zugewandt ist. Gegebenenfalls sind diese, jeweils eine Außenlage der Beschichtung bildenden Lagen über mindestens eine Zwischenlage miteinander verbunden.

Die dem Dichtungselement zugewandte Lage, die z.B. aus Polyethylen (PE) besteht, kann zweckmäßig bei Vulkanisationstemperatur mit dem Material des Dichtungselements verschweißbar sein, so dass eine Beschichtung durch Aufbringen der Folie im Zuge einer sich an die Extrusion von Strangmaterial anschließenden Vulkanisation durchführbar ist.

Dem Aufbringen der Folie kann unmittelbar in einem Online-Prozess die Verschweißung mit den Verbindungselementen erfolgen, wobei dieser Schweißprozess durch die Hitze des ggf. noch Vulkanisationstemperatur aufweisenden Dichtungselements unterstützt wird.

Zweckmäßig wird das Verbindungselement mit Hilfe einer geeigneten Montageeinrichtung auf das Dichtungselement aufgebracht, wobei vorher die dem Dichtungselement zugewandte Verschweißungsflöche des Verbindungselements z.B. durch einen direkt auf diese Fläche gerichteten Laser oder Heißluftstrahl erhitzt und angeschmolzen wird.

## Patentansprüche

1. Dichtungselement aus Elastomermaterial, das zur Befestigung auf einem Dichtungsträger, insbesondere an einer Fahrzeugkarosserie, vorgesehen ist, wobei das Dichtungselement eine Beschichtung (14,14a) aufweist, über die es mit einem Element (9,9a) zur mechanischen Verbindung des Dichtungselements mit dem Dichtungsträger (21,21a) oder dem Dichtungsträger selbst verschweißbar ist,
**dadurch gekennzeichnet,**
**dass** die Beschichtung eine laminierte aufgebrachte Folie ist, mehrere Lagen aufweist und, jeweils als Außenlage, eine Lage aus Polyethylen (PE) und eine Lage aus Polyamid (PA) umfasst.

2. Dichtungselement nach Anspruch 1,
**dadurch gekennzeichnet,**
**dass** das Dichtungselement ein extrudierter Dichtungsstrang ist.

3. Dichtungselement nach Anspruch 1 oder 2,
**dadurch gekennzeichnet,**
**dass** die Beschichtung (14,14a) eine Thermoplastbeschichtung ist.

4. Dichtungselement nach einem der Ansprüche 1 bis 3,
**dadurch gekennzeichnet,**
**dass** in Stranglängsrichtung zueinander im Abstand angeordnete Verbindungselemente (9) vorgesehen sind.

5. Dichtungselement nach einem der Ansprüche 1 bis 4,
**dadurch gekennzeichnet,**
**dass** das Verbindungselement ein in einem Steckloch im Dichtungsträger einrastendes Steckverbindungselement (9) ist.

6. Dichtungselement nach einem der Ansprüche 1 bis 5,
**dadurch gekennzeichnet,**
**dass** die Beschichtung (14,14a) an einer Schlauchwand (5) eines schlauchförmigen Dichtungsabschnitts (1) oder an einem Fußteil (19) eines lippenförmigen Dichtungsabschnitts (18) des extrudierten Dichtungsstrangs gebildet ist.

7. Dichtungselement nach einem der Ansprüche 1 bis 6,
**dadurch gekennzeichnet,**
**dass** das Verbindungselement (9) mit dem Dichtungselement über einen an die Form des beschichteten Dichtungselements angepassten Fußteil (15) verschweißbar ist.

8. Dichtungselement nach Anspruch 1,
**dadurch gekennzeichnet,**
**dass** die dem Dichtungselement und die dem Verbindungselement (9,9a) bzw. Dichtungsträger (21,21a) zugewandte Lage jeweils eine besondere Eignung zur Verschweißung mit dem Material des Dichtungselements bzw. dem Material des Verbindungselements (9,9a) oder Dichtungsträger (21,21a) aufweisen, und insbesondere die dem Dichtungselement zugewandte Lage bei Vulkanisationstemperatur des Materials des Dichtungselements mit dem Dichtungselement verschweißbar ist.

9. Dichtungselement nach einem der Ansprüche 1 bis 8,
**dadurch gekennzeichnet,**
**dass** die Lagen über mindestens eine Zwischenlage mit einander verbunden sind.

10. Extrudierter Dichtungsstrang, der zur Befestigung auf einem Dichtungsträger, insbesondere an einer Fahrzeugkarosserie, vorgesehen und mit in Stranglängsrichtung zueinander im Abstand angeordneten Elementen (9) zur mechanischen Verbindung des Dichtungsstrangs mit dem Dichtungsträger vorgefertigt ist, wobei die Verbindungselemente (9) stoffschlüssig mit dem Dichtungsstrang über eine Beschichtung (14) des Dichtungsstrangs verschweißt sind,
**dadurch gekennzeichnet,**
**dass** die Beschichtung eine laminierte aufgebrachte Folie ist, mehrere Lagen aufweist und, jeweils als Außenlage, eine Lage aus Polyethylen (PE) und eine Lage aus Polyamid (PA) umfasst.

11. Extrudierter Dichtungsstrang nach Anspruch 10,
**dadurch gekennzeichnet,**
**dass** die Verbindungselemente (9) mit dem Dichtungsstrang über die Beschichtung (14) durch Reib-, Ultraschall- oder/und Laserschweißen verbunden sind.

## Claims

1. Sealing element made from an elastomer material, which is provided for fastening to a seal support, in particular on a vehicle body, wherein the sealing element has a coating (14, 14a) by way of which said sealing element is weldable to an element (9, 9a) for the mechanical connection of the sealing element to the seal support (21, 21a), or to the seal support *per se,*
**characterized in that**
the coating is a film applied by lamination, has a plurality of layers and, in each case as an external layer, comprises one layer of polyethylene (PE) and one layer of polyamide (PA).

2. Sealing element according to Claim 1,
**characterized in that**
the sealing element is an extruded seal strand.

3. Sealing element according to Claims 1 or 2,
**characterized in that**
the coating (14, 14a) is a thermoplastic coating.

4. Sealing element according to one of Claims 1 to 3,
**characterized in that**
connection elements (9) that are disposed so as to be spaced apart in the longitudinal direction of the strand are provided.

5. Sealing element according to one of Claims 1 to 4,
**characterized in that**
the connection element is a plug-connection element (9) that latches into a plug hole in the seal support.

6. Sealing element according to one of Claims 1 to 5,
**characterized in that**
the coating (14, 14a) is formed on a tube wall (5) of a tubular sealing portion (1), or on a base part (19) of a lip-shaped sealing portion (18) of the extruded seal strand.

7. Sealing element according to one of Claims 1 to 6,
**characterized in that**
the connection element (9) is weldable to the sealing element by way of a base part (15) that is adapted to the shape of the coated sealing element.

8. Sealing element according to Claim 1,
**characterized in that**
the layer that faces the sealing element and the layer that faces the connection element (9, 9a) or the seal support (21, 21a), respectively, in each case have a particular suitability for welding to the material of the sealing element or to the material of the connection element (9, 9a) or the seal support (21, 21a), respectively, and in particular the layer that faces the sealing element is weldable to the sealing element at the vulcanization temperature of the material of the sealing element.

9. Sealing element according to one of Claims 1 to 8,
**characterized in that**
the layers are interconnected by way of at least one intermediate layer.

10. Extruded seal strand which is provided for fastening to a seal support, in particular on a vehicle body, and is pre-fabricated having elements (9) that for mechanically connecting the seal strand to the seal support are disposed so as to be spaced apart in the longitudinal direction of the strand, wherein
the connection elements (9) are welded to the seal strand in a materially integral manner by way of a coating (14) of the seal strand,
**characterized in that**
the coating is a film applied by lamination,
has a plurality of layers and, in each case as an external layer, comprises one layer of polyethylene (PE) and one layer of polyamide (PA).

11. Extruded seal strand according to Claim 10,
**characterized in that**
the connection elements (9) are connected to the seal strand by way of the coating (14) by friction, ultrasonic and/or laser welding.

## Revendications

1. Élément d'étanchéité en matériau élastomère, destiné à la fixation sur un support d'étanchéité, en particulier sur une carrosserie de véhicule, l'élément d'étanchéité présentant un revêtement (14,14a) via lequel il peut être soudé à un élément (9,9a) pour la liaison mécanique de l'élément d'étanchéité au support d'étanchéité (21,21a) ou au support d'étanchéité lui-même, **caractérisé en ce que** le revêtement est une feuille stratifiée appliquée, présente plusieurs couches et, à chaque fois comme couche externe, une couche en polyéthylène (PE) et une couche en polyamide (PA).

2. Élément d'étanchéité selon la revendication 1, **caractérisé en ce que** l'élément d'étanchéité est un brin d'étanchéité extrudé.

3. Élément d'étanchéité selon la revendication 1 ou 2, **caractérisé en ce que** le revêtement (14,14a) est un revêtement thermoplastique.

4. Élément d'étanchéité selon l'une quelconque des revendications 1 à 3, **caractérisé en ce que** des éléments de liaison (9) sont disposés à une certaine distance les uns des autres dans la direction longitudinale du brin.

5. Élément d'étanchéité selon l'une quelconque des revendications 1 à 4, **caractérisé en ce que** l'élément de liaison est un élément de liaison par enfichage (9) s'encliquetant dans un trou d'enfichage dans le support d'étanchéité.

6. Élément d'étanchéité selon l'une quelconque des revendications 1 à 5, **caractérisé en ce que** le revêtement (14,14a) est formé au niveau d'une paroi de flexible (5) d'une section d'étanchéité (1) en forme de flexible ou au niveau d'une partie de pied (19) d'une section d'étanchéité (18) en forme de lèvre du brin d'étanchéité extrudé.

7. Élément d'étanchéité selon l'une quelconque des revendications 1 à 6, **caractérisé en ce que** l'élément de liaison (9) peut être soudé à l'élément d'étanchéité via une partie de pied (15) adaptée à la forme de l'élément d'étanchéité revêtu.

8. Élément d'étanchéité selon la revendication 1, **caractérisé en ce que** la couche orientée vers l'élément d'étanchéité et celle orientée vers l'élément de liaison (9,9a) ou, selon le cas, vers le support d'étanchéité (21,21a) présentent à chaque fois une adéquation particulière pour le soudage au matériau de l'élément d'étanchéité ou, selon le cas, au matériau de l'élément de liaison (9,9a) ou du support d'étanchéité (21,21a) et, en particulier, la couche orientée vers l'élément d'étanchéité peut être soudée à l'élément d'étanchéité à la température de vulcanisation du matériau de l'élément d'étanchéité.

9. Élément d'étanchéité selon l'une quelconque des revendications 1 à 8, **caractérisé en ce que** les couches sont reliées l'une à l'autre via au moins une couche intermédiaire.

10. Brin d'étanchéité extrudé destiné à la fixation sur un support d'étanchéité, en particulier sur une carrosserie de véhicule, et préfabriqué avec des éléments (9) disposés à une certaine distance les uns des autres dans la direction longitudinale du brin pour la liaison mécanique du brin d'étanchéité au support d'étanchéité, les éléments de liaison (9) étant soudés au brin d'étanchéité par liaison de matière via un revêtement (14) du brin d'étanchéité, **caractérisé en ce que** le revêtement est une feuille stratifiée appliquée, présente plusieurs couches et, à chaque fois comme couche externe, une couche en polyéthylène (PE) et une couche en polyamide (PA).

11. Brin d'étanchéité extrudé selon la revendication 10, **caractérisé en ce que** les éléments de liaison (9) sont reliés au brin d'étanchéité via le revêtement (14) par soudage par frottement, par ultrasons et/ou au laser.
